# EUROPEAN PATENT SPECIFICATION

(11) **EP 2 199 105 B1**
(45) Date of publication and mention of the grant of the patent: **16.01.2013**
(21) Application number: 09178620.2
(22) Date of filing: 10.12.2009
(51) Int. Cl.: B60C 9/26, B60C 19/00, B29D 30/70

(54) **A method of making a pneumatic tire**
Verfahren zur Herstellung eines Luftreifens
Procédé de fabrication d'un pneu

(30) Priority: 19.12.2008 US 339605
(43) Date of publication of application: 23.06.2010
(73) Proprietor: The Goodyear Tire & Rubber Company, Akron, OH 44316-0001 (US)
(72) Inventor: Georges, Francois Pierre Charles, 4970 Stavelot (BE); Gillard, Jean-Michel Alphonse Fernand, 6700 Arlon (BE); Krier, Roland Willibrord, 6834 Biwer (LU); Mathonet, Vincent Benoit, 6720 Habay-la-Neuve (BE); Nicolas, Bernard Robert, 6700 Arlon (Bonnert) (BE)
(74) Representative: Kutsch, Bernd

(56) References cited:
- EP-A2- 0 501 782
- WO-A1-86/01151

## Description

### Field of the Invention

This invention relates to a pneumatic tire having a carcass and a belt reinforcing structure, and, more particularly, to methods of forming a zigzag belt structure for pneumatic tires such as a radial ply tires for use in aircraft, trucks and other high load applications.

### Background of the Invention

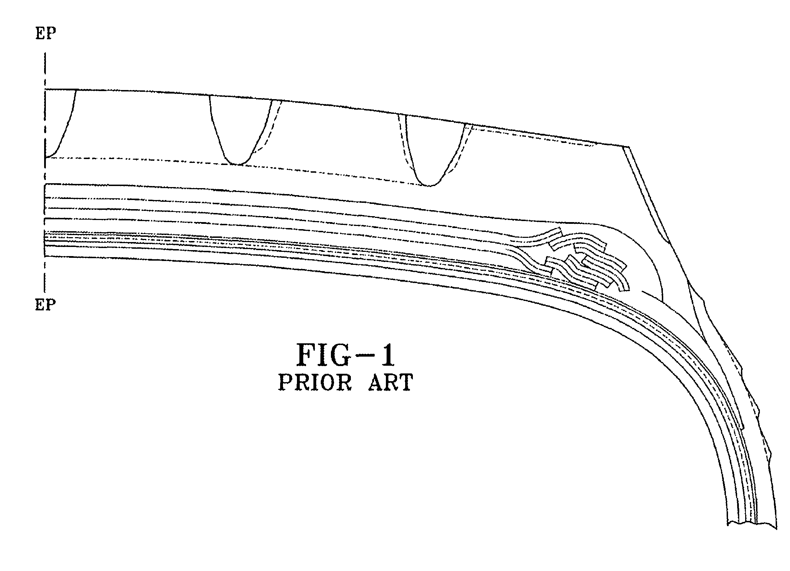

In tires that have heavy loads such as truck tires or aircraft tires, zigzag belt layers have been utilized for the belt package. Zigzag belt layers eliminate working belt endings at the smoulder An exemplary portion of a tire with a zigzag belt layer is shown in Figure 1. The advantage of zigzag belt layers is that there are no working belt edges near the shoulder, which greatly improves tire durability. The disadvantage to zigzag belt layers is that at the edges near the shoulder, there are overlapping layers. In some areas there are too many layers, such as four or more layers typically, and even six or more layers in some locations. The reduction of overlapping strips in the shoulder area has been shown to improve durability. Thus it is desired to have a tire with improved belt edge durability without excess weight.

EP-A- 0 501 782 describes a pneumatic tire having a belt comprising at least one continuous cord wound around the carcass in a zigzag pattern between the edges of the belt.

### Summary of the Invention

The invention relates to a method of forming a zigzag belt structure according to claim 1, to a method of making a pneumatic tire according to claim 13, and to a tire according to claim 15.

Dependent claims refer to preferred embodiments of the invention.

The invention provides in a first preferred aspect a method of making a pneumatic tire having a tread, a carcass and a zigzag belt structure interpose between the carcass and the tread, and forming the zigzag belt structure of at least two layers of cords interwoven together from a strip of rubber reinforced with one or more cords. The zigzag belt structure is made by forming the strip in a first zigzag winding having a first amplitude W1 followed by a second amplitude W2 extending in a direction opposite said first amplitude, wherein said amplitudes are measured from the axial centerplane, wherein W1 is different than W2, and then indexing the strip a desired axial distance. The method further includes the step of forming the strip in a second zigzag winding having a first amplitude followed by a second amplitude extending in a direction opposite said first amplitude, and then repeating each of said windings until the zigzag belt structure is formed.

The invention provides in a second preferred aspect a method of making a pneumatic tire having a tread, a carcass and forming a zigzag belt structure over the carcass, wherein the zigzag belt structure is formed from the following steps: providing a strip of rubber reinforced with one or more cords, and laying up the strip in a first zigzag winding, wherein the wavelength has a first amplitude: Wmax and a second amplitude Wmin, wherein the second amplitude extends in an opposite direction of said first amplitude relative to the center plane, and then axially indexing the strip. Next, laying up the strip in a second zigzag winding adjacent to said first zigzag winding, wherein said second zigzag winding having a first amplitude Wmin and a second amplitude Wmax; wherein the second amplitude extends in an opposite direction of said first amplitude relative to the center plane; and then axially indexing the strip. Then, laying up the strip in a third zigzag winding adjacent to said second zigzag winding, wherein the wavelength has a first amplitude: Wmax and a second amplitude Wmin, and wherein each edge of the third zigzag winding is circumferentially offset from the edges of the first and second zigzag winding. Finally, laying up the strip in a fourth zigzag winding adjacent to said third zigzag winding wherein said fourth zigzag winding having a first amplitude Wmin and a second amplitude Wmax; wherein each of the edges of the fourth zigzag winding are circumferentially offset from the edges of the previous windings.

The first and second zigzag windings each may have turns at the first and second lateral edges, wherein the strip at each edge are extended in a circumferential direction for a distance L.

The first zigzag winding may be alternated with the second zigzag winding or may be not alternated with the second zigzag winding.

In one aspect of the invention, the zigzag belt structure at each edge is radiused.

In yet another aspect of the invention the belt at each edge extends in a substantially circumferential direction for a specified distance L.

The zigzag belt structure may comprise a third zigzag winding having a first amplitude Wmax at a first lateral end and a second amplitude Wmin at a second lateral end, wherein the first and second lateral ends of the third windings are circumferentially offset from the first and second lateral ends of the first zigzag winding and the second zigzag winding, respectively.

The zigzag belt structure may comprise a fourth zigzag winding having a first amplitude Wmin at a first lateral end, and a second amplitude Wmax at a second lateral end, wherein the first and second lateral ends of the fourth zigzag windings are each circumferentially offset from the first and second lateral ends of the first zigzag winding and the second zigzag winding, respectively.

In one aspect of the invention, the tire may comprise one or preferably two working belts. These working belts may be radially inner working belts or radially outer working belts with the zigzag belt structure radially above or radially below the working belts respectively. The zigzag belt structure may also be located radially between the two working belts.

In one aspect of the invention, the radially outer working belt may have a width which ranges from 60% to 88% of the tread arc width or the tire.

In one aspect of the invention, the radially inner working belt may be the widest belt of the belt reinforcement structure.

In one aspect of the invention, the radially inner working belt may have a width equal or about equal to the tread arc width or the tire.

In one aspect of the invention, the zigzag belt structure may have a width in a range of from 70% to 80%, more preferably 75%, of the tread arc width of the tire.

In one aspect of the invention, the zigzag belt structure may be the narrowest belt of the belt structure.

In another aspect of the invention, the zigzag belt structure may have a width in the range of from 50% to 75% of the tread arc width of the tire.

In one aspect of the invention, the zigzag belt structure may be reinforced with a wire or cord having a % elongation at 10% of breaking load greater than 0.40 %, preferably greater than 0.45 %, when taken from wire or cord from a cured tire.

In a preferred aspect of the invention, the strip forming the zigzag belt structure is reinforced with steel cord or aramid cord.

In one aspect of the invention, the second zigzag winding may abut the first zigzag winding.

In one aspect of the invention, the first and second zigzag windings may each have turns at or close to the first and second lateral edges.

In one aspect of the invention, the strip at or close to each lateral belt edge may be extended in a circumferential or substantially circumferential direction for a distance L, wherein L preferably is in a range of from 5 to 80 mm such as from 20 to 60 mm.

In one aspect of the invention, the zigzag belt structure may extend to a first belt edge point at or close to a lateral belt edge in a first winding and to a second belt edge point at or close to this lateral belt edge in a second winding, wherein the first belt edge point is circumferentially offset a distance from the second belt edge point, the offset distance preferably being in a range of from 5 to 120 mm such as from 10 to 60 mm.

In one aspect of the invention, zigzag belt structure may have N zigzag waves per winding wherein N is ≤ 1, alternatively ≤ 0.5 such as 0.25.

In one aspect of the invention, the zigzag belt structure may have N zigzag waves per winding wherein N is ≥ 1, alternatively ≥ 1.5 such as 2.

In one aspect of the invention, the first through third or first through fourth zigzag windings may be repeated in order until the zigzag belt structure is formed.

In a preferred aspect of the invention, the strip is a continuous strip, preferably a single continuous strip forming the whole zigzag belt structure.

The tire in accordance with the invention preferably is a truck tire or a radial medium truck tire.

### Definitions

"Axial" and "axially" mean lines or directions that are parallel to the axis of rotation of the tire.

"Bead" means that part of the tire comprising an annular tensile member wrapped by ply cords and shaped, with or without other reinforcement elements such as flippers, chippers, apexes, toe guards and chafers, to fit the design rim.

"Working belts" or "cut breaker reinforcing structure" means at least two cut layers of plies of parallel cords, woven or unwoven, underlying the tread, unanchored to the bead, and having both left and right cord angles in the range from 10 degrees to 60 degrees with respect to the equatorial plane of the tire.

"Carcass" means the tire structure apart from the belt structure, tread, undertread, and sidewall rubber over the plies, but including the beads.

"Circumferential" means lines or directions extending along the perimeter of the surface of the annular tread perpendicular to the axial direction.

"Cord" means one of the reinforcement strands which the plies in the tire comprise.

"Equatorial plane (EP)" means the plane perpendicular to the tire's axis of rotation and passing through the center of its tread.

"Radial-ply tire" means a belted or circumferentially-restricted pneumatic tire in which the ply cords which extend from bead to bead are laid at cord angles between 65-90 degrees with respect to the equatorial plane of the tire.

"Winding" means the pattern of the strip formed in a first revolution of the strip around a tire building drum, tire or core.

### Brief Description of the Drawings

FIG. 1 is a schematic sectional view of part of a prior art tire having a zigzag belt;
FIG. 2 illustrates a partial cross-section of an exemplary radial tire of the present invention;
FIG. 3 is an example of a tire building drum showing the belt of the present invention being formed;
FIG. 4A is an example of a tire building drum layed out circumferentially for illustration purposes illustrating a first full revolution of the strip layup forming the zigzag belt;
FIG. 4B is the tire building drum of FIG. 4A illustrating only a second revolution of the cord pattern of the zigzag belt (the first revolution was removed for clarity);
FIG. 4C is a closeup view of the strip at the belt edge undergoing a U turn;
FIG. 5A is an example of a tire building drum layed out circumferentially for illustration purposes illustrating a first full revolution or first winding of the strip layup forming the zigzag belt for the specific case of one zigzag per drum revolution;
FIG. 5B is the tire building drum of FIG. 5A illustrating the second revolution of the drum showing the first and second winding of the strip layup forming the zigzag belt for the specific case of one zigzag per drum revolution;
FIG. 5C is the tire building drum of FIG. 5A illustrating the third revolution of the drum showing the first, second and third winding of the strip layup forming the zigzag belt for the specific case of one zigzag per drum revolution;
FIG. 5D is the tire building drum of FIG. 5A illustrating the fourth revolution of the drum showing the first, second, third and fourth winding of the strip layup forming the zigzag belt for the specific case of one zigzag per drum revolution;
FIG. 6 illustrates the zigzag belt edge;
FIG. 7 illustrates a cross-sectional view of the zigzag belt edge at sections A-A, B-B, C-C, D-D and E-E showing the estimated overlap of layers;
FIG. 8 illustrates a cross-sectional view of the zigzag belt edge at sections A-A, B-B, C-C, D-D and E-E showing the estimated overlap of layers for the prior art zigzag belt of Fig. 1;
FIGS. 9A-9C illustrate a zigzag belt having a traverse offset of 0.1 mm, and wherein the drum offset angle is varied from 6.75 deg shown in Fig. 9A, to 13.5 deg shown in Fig. 9B, and 27 deg shown in Fig. 9c;
FIGS. 10A-10C illustrate a zigzag belt having a traverse offset of 8 mm, and wherein the drum offset angle is varied from 6.75 deg shown in Fig. 10A, to 13.5 deg shown in Fig. 10B, and 27 deg shown in Fig. 10C;

### Detailed Description of an Example Embodiment the Invention

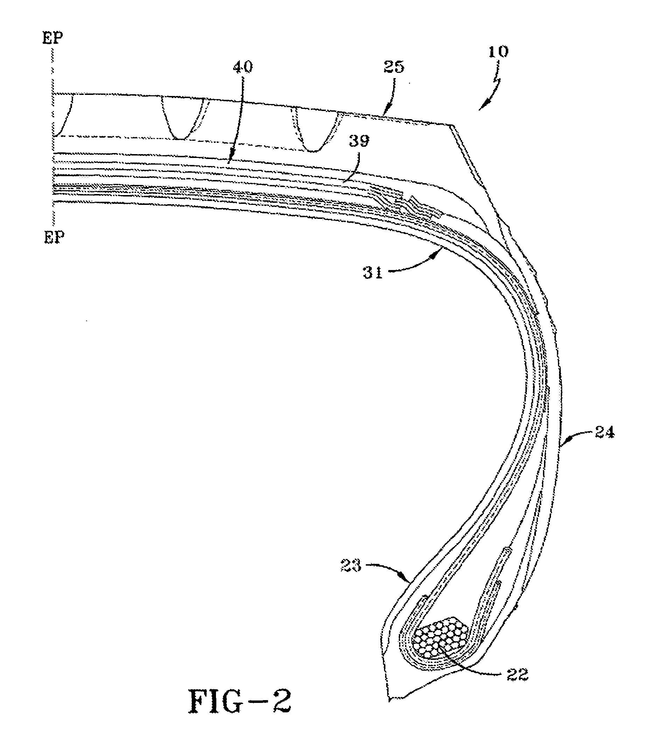

FIG. 2 illustrates a partial cross-section of an exemplary radial tire 10 which includes a bead portion 23 having a bead core 22 embedded therein, a sidewall portion 24 extending radially outward from the bead portion 23, and a cylindrical tread portion 25 extending between radially outer ends of the sidewall portions 24. The tire 10 is reinforced by a carcass 31 toroidally extending from one bead portion 23 to the other bead portion (not shown). The carcass 31 includes at least one carcass ply. The carcass ply is anchored to the bead core and for example, may wind around each bead core 22 from inside of the tire 10 away from the equatorial plane EP to form turnup portions. A belt structure 40 is arranged between the carcass 31 and the tread portion 25.

The belt structure 40, according to an example embodiment of the present invention, comprises one or more belts, wherein at least one belt is a zigzag belt structure 39. The zigzag belt structure 39 has a modified zigzag layup pattern (or a substantially zigzag layup pattern which shall include a sinusoidal layup pattern or a substantially sinusoidal layup pattern) to reduce the number of layers at the tire shoulder. The layup of the zigzag belt structure is described as follows.

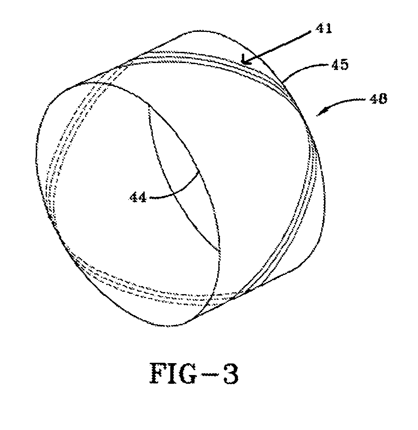

Figure 3 illustrates a tire building drum 48 having axial circumferential edges 44, 45. In order to form the zigzag belt structure 39 on the tire building drum, the tire building drum is rotated as a rubberized strip 41 of cord is wound around the drum 48 in a generally circumferential direction, extending in an alternating fashion from one drum edge 44 to the other drum edge 45.

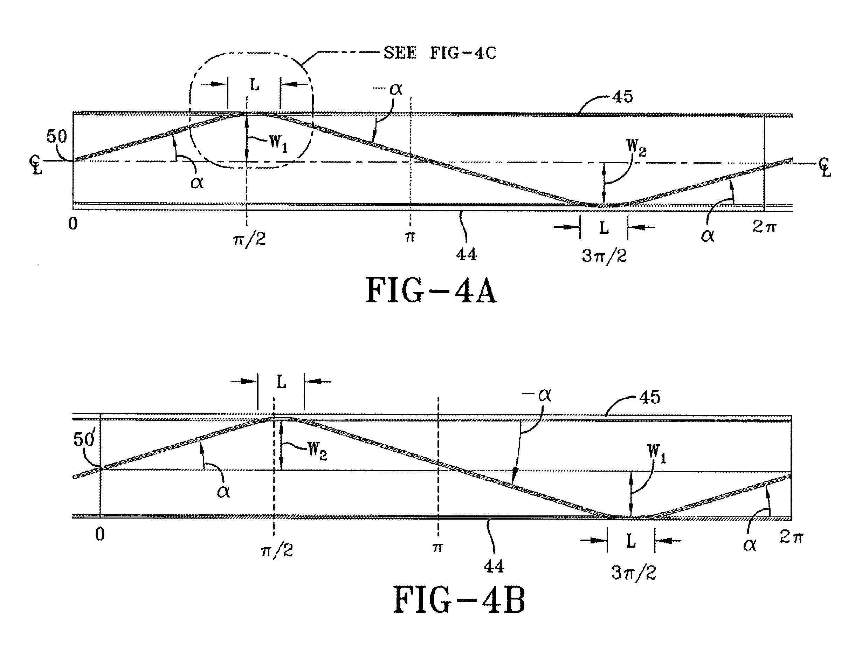

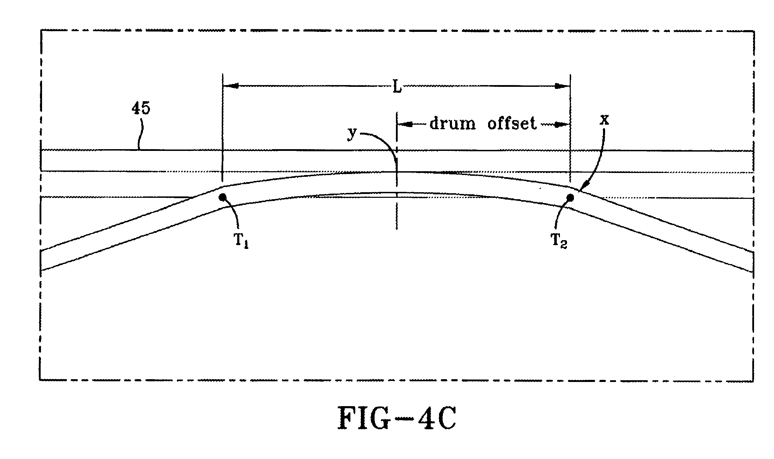

Figures 4a and 4b illustrate the tire building drum 48 wherein the circumference of the drum is laid out flat, from 0 radians (degrees) to 2π radians (360 deg). Figure 4a illustrates a first winding for a first drum revolution of the zigzag belt structure 39 being formed on the drum. The invention may also be formed on a core or tire, and is not limited to being formed on a tire building drum. For illustration purposes, the initial starting point 50 will be the mid-circumferential centerplane CL of the drum at 0 radians, however any starting point location may be used. The strip is first angled at an angle α to the edge 45 of the tire building drum. This correlates to a location of about π/2 radians for one zigzag per revolution. The following description illustrates the pattern for one zigzag wave per revolution, and is not limited to same, as the zigzag wave per revolution. At the edge 45 of the tire building drum, the strip has a first axial width or amplitude W1, as measured from the center or mid-circumferential plane CL of the drum. W1 is preferably the maximum axial width located near the edge of the drum. Next, the strip may optionally continue for a distance L, for example for a distance L of 5 mm to 100 mm or from 15 mm to 70 mm, in a circumferential (0 degree) direction at the edge 44. As shown in Fig. 4c, the strip is preferably U turned without sharp angles, and preferably is radiused at the transition points T1 and T2. As shown in FIG. 4A, the strip is then angled at preferably - α towards the opposite drum edge 44. At about 3/2 π radians, the strip has a second axial width or amplitude W2, which is measured from the centerplane, and is different than W1. W1 is preferably greater than W2. Thus the strip does not extend completely to the axial end 44 of the drum. Next, the strip may be optionally oriented in a substantially circumferential direction (0 degrees) for a circumferential distance of preferably again the distance L. Finally, the strip is angled towards the mid-circumferential centerplane at an angle α. The strip reaches the mid-circumferential centerplane at about 2π radians.

The layup of the strip for a second winding is shown in Fig. 4b. For the sake of clarity, the first winding has been removed. The starting point 50' of the second winding has been axially indexed a desired amount, depending upon the amount of gap between successive strips desired. Preferably, the gap between successive strips is between 0.5 and 2 times the width of the strip, more preferably 1.0 times the strip width. For illustration purposes, the second winding of the strip is indexed a strip width so it abuts with the first winding. Starting at 50', the strip is first angled at an angle α to the edge 45 of the tire building drum. This correlates to a location of about π/2 radians for one zigzag per revolution. At this location, the strip has an axial width or amplitude W2, as measured from the center or mid-circumferential plane CL of the drum. Next, the strip may optionally continue for the distance L in a circumferential (about 0 degree) direction at the edge 44. As shown in Fig. 4c, the strip is preferably turned at the drum edge without sharp angles, and preferably is radiused at the transition points T1, T2. As shown in FIGS. 4b and 4C, the strip is then angled from the transition point T2 at preferably - α towards the opposite drum edge 44. At about 3/2 π radians, the strip has an axial width or amplitude W1. Next, the strip may optionally be oriented in a circumferential direction (about 0 degrees) for the circumferential distance L. As shown in Fig. 4C, the strip is preferably turned at the drum edge without sharp angles, and preferably is radiused at the transition points T1, T2. Finally, the strip is angled towards the mid-circumferential centerplane at the angle α. The strip reaches the mid-circumferential centerplane at 2π radians.

Thus in a first strip winding, the strip traversed from the starting point to a first amplitude W1, then to a second amplitude W2, and then back to the starting point. W1 and W1 are in opposite directions from the centerplane, and W₁≠ W₂, and preferably W₁ > W₂ such as W₁ ≥ 1.05 W₂ or W₁ ≥ 1.02 W₂ and W₁ ≤ 1.1 W₂. Then in a second strip winding, the strip traversed from an indexed starting point to a first amplitude W2, then to a second amplitude W1, and then back to the starting point. Thus the strip windings preferably abut, but may also be overlapped or be spaced apart. The strip may also be offset circumferentially at the edges, alone, or in combination with the variable amplitude zigzag pattern.

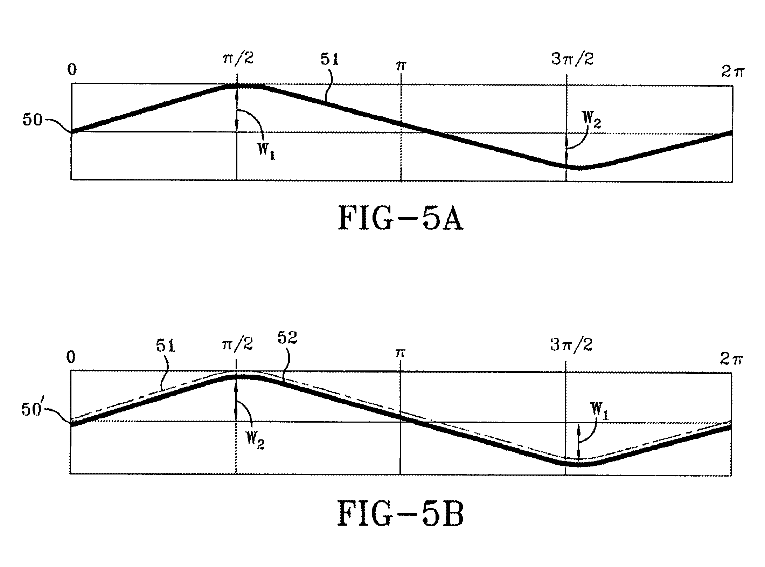

A third embodiment of the invention is now described. Figure 5A illustrates a first winding of the strip having a first amplitude W1 followed by a second amplitude W2 in the opposite direction. Figure 5B illustrates a second winding of the strip wherein the strip has a first amplitude W2 followed by a second amplitude W1 in the opposite direction. The second winding has been indexed a desired distance from the first winding, and thus may abut (as shown), overlap or be spaced apart.

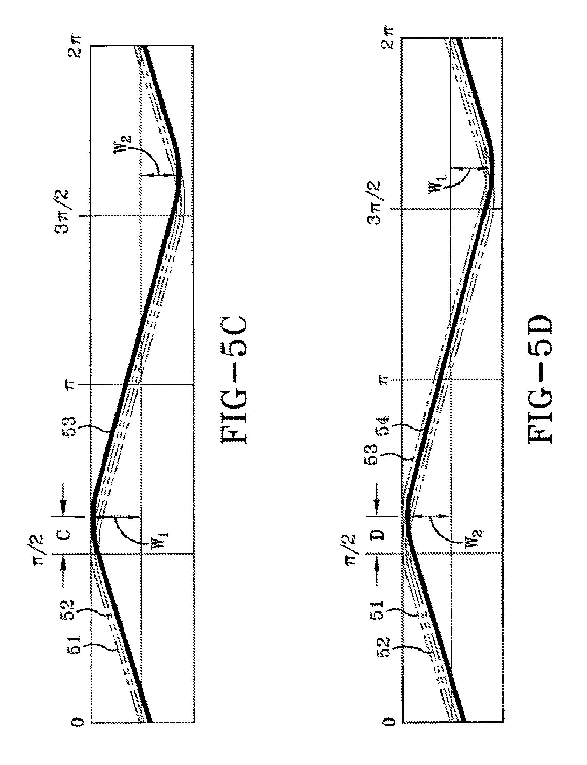

Figure 5C illustrates a third winding of the strip, wherein the strip winding has been circumferentially shifted or offset from the previous two windings of strip, so that the turn at the edge is offset from the edges of the previous windings. Just past the π/2 location an offset distance C, the strip has a W1 amplitude and a W2 amplitude just past the 3 π/2 location. Figure 5D illustrates a fourth strip winding, wherein the strip is also circumferentially offset from the first, second windings, in order to reduce the belt strip gauge at the outer belt edge. As shown, just past the π/2 location at an offset distance D, the strip has a first amplitude W2 and a second amplitude W1 at an offset distance D. The offset distance D is different than the offset distance C. Preferably, the offset distance D is less than the offset distance C. In order to form the complete belt layer, the sequence as described is repeated until the belt layer is formed.

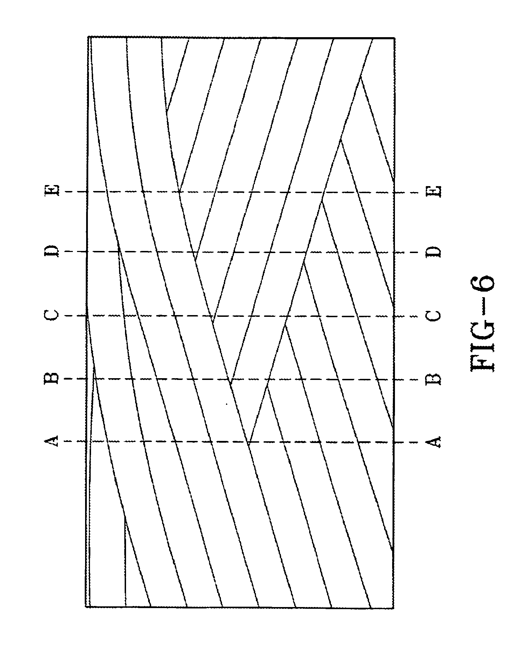

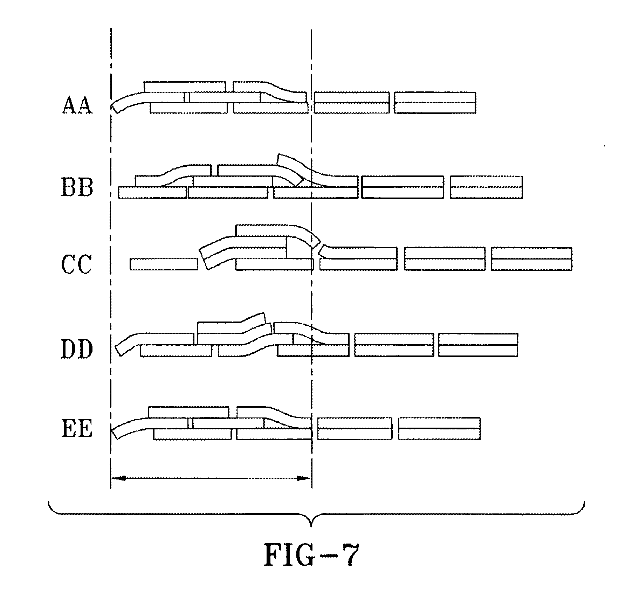

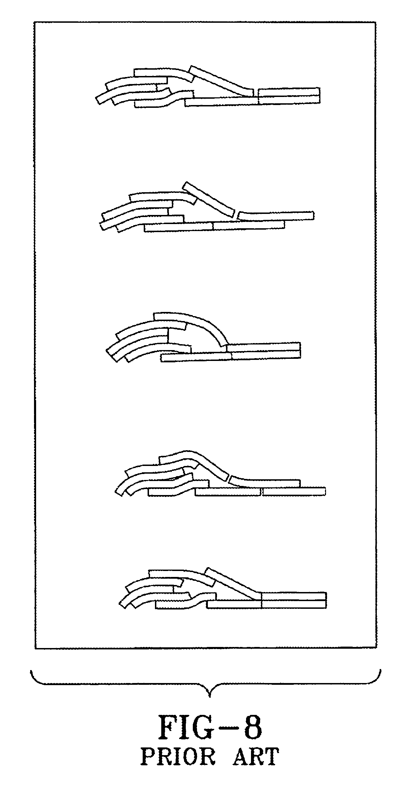

Figure 6 illustrates a one zigzag wave per revolution belt in the area near the belt edge having multiple layers of strips. Figure 7 illustrates the cross-sectional views of the belt edge taken at various locations A-A through E-E. As shown, the amount of strip overlap varies from about one layer to a maximum of 4 layers in section C-C. Figure 8 illustrates the prior art zigzag belt layup where there are up to 6 layers overlapping each other. Thus the belt configuration of the present invention has reduced the number of overlapping layers which are believed to reduce tire durability.

The strip is formed of a rubberized ribbon of one or more cords. The width of the strip may vary, and may be for example, 5-25 mm wide, preferably 5 to 14 mm wide, and more preferably 10-13 mm wide. The cord reinforcements may be formed of nylon, polyester, aramid or steel. All of the above exemplary embodiments were illustrated with one zigzag wave per one drum revolution. The invention may also include N zigzag waves per one drum revolution, wherein N is 0.25 or greater. N may also be an integer ≥ 1. For example, the strip may be layed up so that one full zigzag wave occurs in 2 full drum revolutions, or ½ zigzag per revolution. The invention as described above may also abut the strips, thus having no gap in spacing of consecutive windings. Alternatively, the successive winding of strips may be overlapped from 1% to 100%, preferably 30% to 70%, of the strip width. Alternatively, the successive winding of strips may have a gap distance G formed therebetween. G may vary from about 1 % to 200%, preferably 20% to 100%, of the strip width.

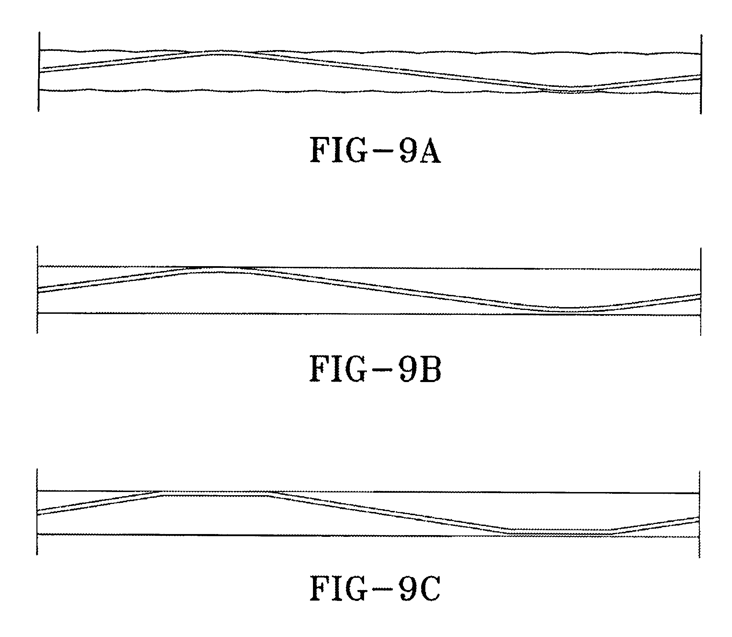

Another variable which may be utilized is the drum offset, which is best shown in Fig. 4c. The drum offset is the circumferential distance of the drum (measured in degrees or radians) from the strip edge at point Y to point X. In other words, the drum offset is half the circumferential distance over which the strip does a U-turn, as measured from the point Y closest to the edge, to the point X where the turn is completed. The drum offset or turning distance can be varied, effectively elongating the edge in the circumferential direction if increased, or resulting in a sharper turning angle if decreased. For example, the drum offset may range from 5 degrees to 30 degrees, and more preferably from 10 to 16 degrees. As the drum offset increases, the angle of the strip α also increases. Figures 9A-9C illustrates a strip layed upon the drum in a one zigzag per drum revolution. Figure 9A illustrates a drum offset of 6.75 degrees, resulting in an α of 6.65 degrees. Figure 9B illustrates a drum offset of 13.5 degrees, resulting in an α of 7.22 degrees. Figure 9C illustrates a drum offset of 27 degrees, resulting in an α of 8.76 degrees. As can be seen from a review of all of the Figures, as the drum offset distance is increased, the angle at the turnaround elongates along the edge and results in a smoother pass. The increase in drum offset also results in a slighter higher α. As the drum offset is increased, the amount of overlap of layers of the strip increases from 2.83 in Fig. 9A, to 3.87 in Fig. 9B, and over 6 in Fig. 9C.

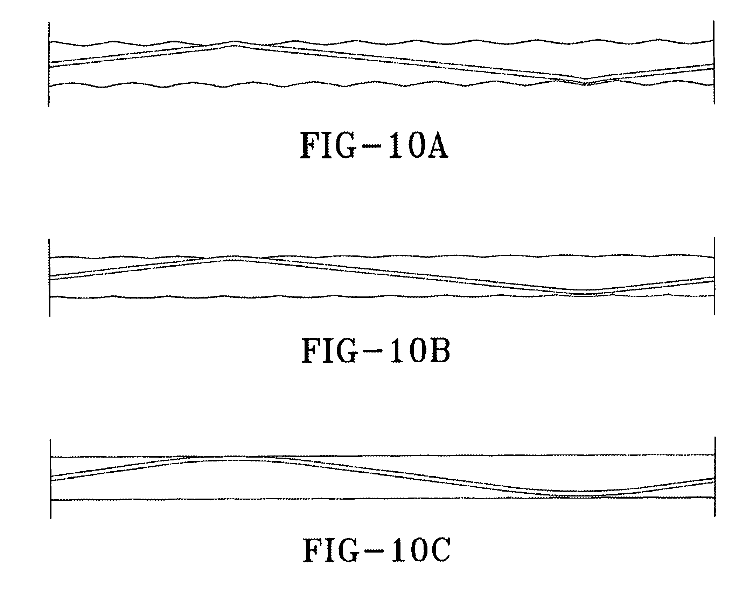

Another variable which may be utilized is the traverse offset. The traverse offset is the axial distance of the belt edge from the edge of the drum edge, in mm. By increasing the traverse offset, the strip starts to turn earlier, and can result in uneven belt edges as shown in Figures 10a and 10b, as compared to Figures 9a and 9b. Figures 10A-10C illustrate an 8 mm traverse offset. Figure 10A illustrates a drum offset of 6.75 degrees, resulting in an α of 5.96 degrees. Figure 10B illustrates a drum offset of 13.5 degrees, resulting in an α of 6.48 degrees. Figure 10C illustrates a drum offset of 27 degrees, resulting in an α of 7.18 degrees. The effect of decreasing the traverse offset results in a belt with more even or smoother edges and a slight reduction in the circumferential angle α in the strip.

## Claims

1. A method of forming a zigzag belt structure (39) for a pneumatic tire, the zigzag belt structure (39) comprising at least two layers of cords interwoven together from a strip (41, 51, 52, 53, 54) of rubber reinforced with one or more cords, the method comprising:
laying up the strip (41, 51, 52, 53, 54) in a first zigzag winding extending between a first lateral belt edge (44) and a second lateral belt edge (45) in an at least substantially zigzag or sine wavelength having a first amplitude (W1) in a first direction followed by a second amplitude (W2) extending in a direction opposite the first direction, wherein the amplitudes (W1, W2) are measured from the equatorial plane (EP), wherein the first amplitude (W1) is different from the second amplitude (W2);
indexing the strip an axial and/or circumferential distance; then
laying up the strip (41, 51, 52, 53, 54) in a second zigzag winding having a first amplitude followed by a second amplitude extending in a direction opposite said first amplitude; and
repeating the first and second windings until the zigzag belt structure (39) is formed.

2. The method of claim 1 wherein the first and second windings are repeated in no particular order.

3. The method of claim 1 or 2 wherein the step of laying up the strip (41, 51, 52, 53, 54) in the second zigzag winding comprises extending the strip (41, 51, 52, 53, 54) between the first lateral belt edge (44) and the second lateral belt edge (45) in an at least substantially zigzag or sine wavelength having a first amplitude (W2) in a first direction followed by a second amplitude (W1) extending in a direction opposite the first direction.

4. The method of at least one of the previous claims wherein the strip (41, 51, 52, 53, 54) at each lateral edge is radiused.

5. The method of at least one of the previous claims wherein strip at each lateral edge extends in a substantially circumferential direction for a specified distance (L).

6. The method of at least one of the previous claims wherein the zigzag belt structure (39) has a first belt edge in a first winding, and a second belt edge in a second winding, wherein the midpoint of the first belt edge is circumferentially offset from the midpoint of the second belt edge.

7. The method of at least one of the previous claims wherein the first and/or second zigzag winding has N zigzag waves per drum revolution wherein N is ≤1.

8. The method of at least one of the previous claims wherein the first and/or second zigzag winding on odd drum revolutions has belt edges which extend in the circumferential direction a first distance L1, and on even drum revolutions has belt edges which extend in the circumferential direction a second distance L2, wherein L1 ≠L2.

9. The method of claim 1 wherein after laying up the strip (41, 51, 52, 53, 54) in the first zigzag winding, axially and/or circumferentially indexing the strip (41, 51, 52, 53, 54), and laying up the strip (41, 51, 52, 53, 54) in the second zigzag winding adjacent to the first zigzag winding, the method further comprises:
axially and/or circumferentially indexing the strip (41, 51, 52, 53, 54); and
laying up the strip (41, 51, 52, 53, 54) in a third zigzag winding adjacent to the second zigzag winding, wherein the wavelength has a first amplitude and a second amplitude, wherein each edge of the third zigzag winding is circumferentially offset from the edges of the first and second zigzag winding; and
laying up the strip (41, 51, 52, 53, 54) in a fourth zigzag winding adjacent to the third zigzag winding wherein the fourth zigzag winding has a first amplitude and a second amplitude, wherein each of the edges of the fourth zigzag winding are circumferentially offset from the edges of the previous windings.

10. The method of any of the previous claims wherein the strip (41, 51, 52, 53, 54) is a continuous strip.

11. The method of any of the previous claims wherein the strip has a lateral width in a range of from 5 mm to 40 mm, alternatively in a range of from 9 mm to 20 mm or from 12 mm to 16 mm.

12. The method of at least one of the previous claims wherein the strip is reinforced with aramid cord or steel cord.

13. A method of making a pneumatic tire (10), the method comprising the steps of providing a tread (25), a carcass (31) and a zigzag belt structure (39) interposed between the carcass (31) and the tread (25), wherein in the zigzag belt structure (39) is made in accordance with claim 1.

14. The method of claim 13 further comprising the step of helically winding a circumferential belt.

15. A tire made by the methods of any of the previous claims.

## Patentansprüche

1. Verfahren zur Bildung einer Zickzack-Gürtelstruktur (39) für einen Luftreifen, wobei die Zickzack-Gürtelstruktur (39) mindestens zwei Lagen von Korden umfasst, die aus einem Streifen (41, 51, 52, 53, 54) aus Gummi, verstärkt mit einem oder mehr Korden, miteinander verwoben sind, wobei das Verfahren umfasst:
Auflegen des Streifens (41, 51, 52, 53, 54) in einer ersten Zickzackwicklung, die sich zwischen einer ersten seitlichen Gürtelkante (44) und einer zweiten seitlichen Gürtelkante (45) in einer mindestens im Wesentlichen Zickzack- oder Sinus-Wellenlänge erstreckt, die eine erste Amplitude (W1) in einer ersten Richtung, gefolgt von einer zweiten Amplitude (W2), die sich in einer Richtung entgegengesetzt zu der ersten Amplitude erstreckt, aufweist, wobei die Amplituden (W1, W2) von der Äquatorebene (EP) gemessen werden, wobei die erste Amplitude (W1) verschieden von der zweiten Amplitude (W2) ist;
Indexieren des Streifens in einem axialen und/oder umfangsgerichteten Abstand; dann
Auflegen des Streifens (41, 51, 52, 53, 54) in einer zweiten Zickzackwicklung, die eine erste Amplitude, gefolgt von einer zweiten Amplitude, die sich in einer Richtung entgegengesetzt zu der ersten Amplitude erstreckt, aufweist; und
Wiederholen der ersten und zweiten Wicklungen, bis die Zickzack-Gürtelstruktur (39) gebildet ist.

2. Verfahren nach Anspruch 1, wobei die ersten und zweiten Wicklungen in keiner bestimmten Reihenfolge wiederholt werden.

3. Verfahren nach Anspruch 1 oder 2, wobei der Schritt des Auflegens des Streifens (41, 51, 52, 53, 54) in der zweiten Zickzackwicklung das Erstrecken des Streifens (41, 51, 52, 53, 54) zwischen der ersten seitlichen Gürtelkante (44) und der zweiten seitlichen Gürtelkante (45) in einer mindestens im Wesentlichen Zickzack- oder Sinus-Wellenlänge, die eine erste Amplitude (W2) in einer ersten Amplitude aufweist, gefolgt von einer zweiten Amplitude (W1), die sich in einer Richtung entgegengesetzt zu der ersten Richtung erstreckt, umfasst.

4. Verfahren nach mindestens einem der vorgenannten Ansprüche, wobei der Streifen (41, 51, 52, 53, 54) an jeder seitlichen Kante abgerundet ist.

5. Verfahren nach mindestens einem der vorgenannten Ansprüche, wobei der Streifen sich an jeder seitlichen Kante in einer im Wesentlichen umfangsgerichteten Richtung für einen spezifizierten Abstand (L) erstreckt.

6. Verfahren nach mindestens einem der vorgenannten Ansprüche, wobei die Zickzack-Gürtelstruktur (39) eine erste Gürtelkante in einer ersten Wicklung und eine zweite Gürtelkante in einer zweiten Wicklung aufweist, wobei der Mittelpunkt der ersten Gürtelkante von dem Mittelpunkt der zweiten Gürtelkante in Umfangsrichtung versetzt ist.

7. Verfahren nach mindestens einem der vorgenannten Ansprüche, wobei die erste und/oder zweite Zickzackwicklung N Zickzackwellen je Trommelumdrehung aufweist, wobei N ≤ 1 ist.

8. Verfahren nach mindestens einem der vorgenannten Ansprüche, wobei die erste und/oder die zweite Zickzackwicklung bei ungeraden Trommelumdrehungen Gürtelkanten aufweist, die sich in der Umfangsrichtung über einen ersten Abstand L1 erstrecken, und bei geraden Trommelumdrehungen Gürtelkanten aufweist, die sich in der Umfangsrichtung über einen zweiten Abstand L2 erstrecken, wobei L1 ≠ L2.

9. Verfahren nach Anspruch 1, wobei nach dem Auflegen des Streifens (41, 51, 52, 53, 54) in der ersten Zickzackwicklung, axial und/oder in Umfangsrichtung Indexieren des Streifens (41, 51, 52, 53, 54) und Auflegen des Streifens (41, 51, 52, 53, 54) in der zweiten Zickzackwicklung benachbart zu der ersten Zickzackwicklung, das Verfahren weiter umfasst:
axial und/oder in Umfangsrichtung Indexieren des Streifens (41, 51, 52, 53, 54); und
Auflegen des Streifens (41, 51, 52, 53, 54) in einer dritten Zickzackwicklung benachbart zu der zweiten Zickzackwicklung, wobei die Wellenlänge eine erste Amplitude und eine zweite Amplitude aufweist, wobei jede Kante der dritten Zickzackwicklung von den Kanten der ersten und der zweiten Zickzackwicklung in Umfangsrichtung versetzt ist; und
Auflegen des Streifens (41, 51, 52, 53, 54) in einer vierten Zickzackwicklung benachbart zu der dritten Zickzackwicklung, wobei die vierte Zickzackwicklung eine erste Amplitude und eine zweite Amplitude aufweist, wobei jede der Kanten der vierten Zickzackwicklung von den Kanten der vorangehenden Zickzackwicklungen in Umfangsrichtung versetzt ist.

10. Verfahren nach einem der vorgenannten Ansprüche, wobei der Streifen (41, 51, 52, 53, 54) ein kontinuierlicher Streifen ist.

11. Verfahren nach einem der vorgenannten Ansprüche, wobei der Streifen (41, 51, 52, 53, 54) eine seitliche Breite in einem Bereich von 5 mm bis 40 mm, alternativ in einem Bereich von 9 mm bis 20 mm oder von 12 mm bis 16 mm aufweist.

12. Verfahren nach mindestens einem der vorgenannten Ansprüche, wobei der Streifen mit Aramidkord oder Stahlkord verstärkt ist.

13. Verfahren zur Herstellung eines Luftreifens (10), wobei das Verfahren die Schritte umfasst des Bereitstellens einer Lauffläche (25), einer Karkasse (31) und einer Zickzack-Gürtelstruktur (39), die zwischen die Karkasse (31) und die Lauffläche (25) eingefügt ist, wobei die Zickzack-Gürtelstruktur (39) gemäß Anspruch 1 ausgeführt ist.

14. Verfahren nach Anspruch 13, weiter den Schritt des schraubenförmig Wickelns eines umfangsgerichteten Gürtels umfassend.

15. Reifen, hergestellt mittels der Verfahren nach einem der vorgenannten Ansprüche.

## Revendications

1. Procédé de formation d'une structure de ceinture en zigzag (39) pour un bandage pneumatique, la structure de ceinture en zigzag (39) comprenant au moins deux couches de câblés entrelacés les uns avec les autres à partir d'une bande (41, 51, 52, 53, 54) de caoutchouc renforcé avec un ou plusieurs câblés, le procédé comprenant le fait de :
déposer la bande (41, 51, 52, 53, 54) dans un premier enroulement en zigzag s'étendant entre un premier bord de ceinture latéral (44) et un deuxième bord de ceinture latéral (45) dans une longueur d'onde au moins essentiellement en zigzag ou sinusoïdale possédant une première amplitude (W1) dans une première direction suivie d'une deuxième amplitude (W2) s'étendant dans une direction opposée à la première direction, les amplitudes (W1, W2) étant mesurées par rapport au plan équatorial (EP), la première amplitude (W1) étant différente de la deuxième amplitude (W2) ;
soumettre la bande à un mouvement intermittent sur une distance axiale et/ou circonférentielle ; ensuite
déposer la bande (41, 51, 52, 53, 54) dans un deuxième enroulement en zigzag possédant une première amplitude suivie d'une deuxième amplitude s'étendant dans une direction opposée à celle de ladite première amplitude ; et
répéter le premier et le deuxième enroulement jusqu'à ce que l'on obtienne la structure de ceinture en zigzag (39).

2. Procédé selon la revendication 1, dans lequel on répète le premier et le deuxième enroulement dans n'importe quel ordre non particulier.

3. Procédé selon la revendication 1 ou 2, dans lequel l'étape consistant à déposer la bande (41, 51, 52, 53, 54) dans un deuxième enroulement en zigzag comprend le fait d'étendre la bande (41, 51, 52, 53, 54) entre le premier bord de ceinture latéral (44) et le deuxième bord de ceinture latéral (45) dans une longueur d'onde au moins essentiellement en zigzag ou sinusoïdale possédant une première amplitude (W2) dans une première direction suivie d'une deuxième amplitude (W1) s'étendant dans une direction opposée à la première direction.

4. Procédé selon au moins une des revendications précédentes, dans lequel la bande (41, 51, 52, 53, 54) à chaque bord latéral est arrondie.

5. Procédé selon au moins une des revendications précédentes, dans lequel la bande à chaque bord latéral s'étend dans une direction essentiellement circonférentielle sur une distance spécifiée (L).

6. Procédé selon au moins une des revendications précédentes, dans lequel la structure de ceinture en zigzag (39) possède un premier bord de ceinture dans un premier enroulement et un deuxième bord de ceinture dans un deuxième enroulement, le milieu du premier bord de ceinture étant décalé en direction circonférentielle du milieu du deuxième bord de ceinture.

7. Procédé selon au moins une des revendications précédentes, dans lequel le premier et/ou le deuxième enroulement en zigzag possèdent N ondes en zigzag par révolution de tambour, N étant inférieur ou égal à 1.

8. Procédé selon au moins une des revendications précédentes, dans lequel le premier et/ou le deuxième enroulement en zigzag sur un nombre impair de révolutions de tambour possèdent des bords de ceinture qui s'étendent dans la direction circonférentielle sur une première distance L1 et sur un nombre pair de révolutions de tambour possèdent des bords de ceinture qui s'étendent dans la direction circonférentielle sur une deuxième distance L2, L1 étant différent de L2.

9. Procédé selon la revendication 1, dans lequel après avoir déposé la bande (41, 51, 52, 53, 54) dans le premier enroulement en zigzag, soumis la bande (41, 51, 52, 53, 54) à un mouvement intermittent sur une distance axiale et/ou circonférentielle et déposé la bande (41, 51, 52, 53, 54) dans le deuxième enroulement en zigzag adjacent au premier enroulement en zigzag, le procédé comprend en outre le fait de :
soumettre la bande à un mouvement intermittent sur une distance axiale et/ou circonférentielle ; et
déposer la bande (41, 51, 52, 53, 54) dans un troisième enroulement en zigzag adjacent au deuxième enroulement en zigzag, la longueur d'onde possédant une première amplitude et une deuxième amplitude, chaque bord du troisième enroulement en zigzag étant décalé en direction circonférentielle des bords du premier et du deuxième enroulement en zigzag ; et
déposer la bande (41, 51, 52, 53, 54) dans un quatrième enroulement en zigzag adjacent au troisième enroulement en zigzag, le quatrième enroulement en zigzag possédant une première amplitude et une deuxième amplitude, chaque bord du quatrième enroulement en zigzag étant décalé en direction circonférentielle des bords des enroulements précédents.

10. Procédé selon l'une quelconque des revendications précédentes, dans lequel la bande (41, 51, 52, 53, 54) est une bande continue.

11. Procédé selon l'une quelconque des revendications précédentes, dans lequel la bande possède une largeur latérale dans la plage de 5 mm à 40 mm, en variante dans la plage de 9 mm à 20 mm ou de 12 mm à 16 mm.

12. Procédé selon au moins une des revendications précédentes, dans lequel la bande est renforcée avec des câblés d'aramide ou des câblés en acier.

13. Procédé de confection d'un bandage pneumatique 10, le procédé comprenant les étapes consistant à procurer une bande de roulement (25), une carcasse (31) et une structure de ceinture en zigzag (39) intercalée entre la carcasse (31) et la bande de roulement (25), la structure de ceinture en zigzag (39) étant réalisée conformément à la revendication 1.

14. Procédé selon la revendication 13, comprenant en outre l'étape consistant à soumettre une ceinture circonférentielle à un enroulement hélicoïdal.

15. Bandage pneumatique confectionné via les procédés selon l'une quelconque des revendications précédentes.
